# EUROPEAN PATENT SPECIFICATION

(11) **EP 4 147 797 B1**
(45) Date of publication and mention of the grant of the patent: **19.11.2025**
(21) Application number: 22191011.0
(22) Date of filing: 18.08.2022
(51) Int. Cl.: B08B 7/02, B06B 1/06, G02B 27/00

(54) **BRACKET DESIGNS FOR ULTRASONIC LENS CLEANING**
KLAMMERDESIGNS ZUR ULTRASCHALLLINSENREINIGUNG
CONCEPTIONS DE SUPPORT POUR NETTOYAGE DE LENTILLE ULTRASONORE

(30) Priority: 09.09.2021 US 202163242092 P; 10.03.2022 US 202217691987
(43) Date of publication of application: 15.03.2023
(73) Proprietor: Texas Instruments Incorporated, Dallas, TX 75265 (US)
(72) Inventor: MAGEE, David Patrick, Allen, TX (US); CHEN, Hailong, Richardson, TX (US); GRIFFIN, James Kelly, Garland, TX (US)
(74) Representative: Zeller, Andreas

(56) References cited:
- WO-A1-2008/133234
- WO-A1-2017/022382
- WO-A1-2018/085403
- WO-A2-2012/145313

## Description

### CROSS-REFERENCE TO RELATED APPLICATIONS

The present application claims priority to U.S. Provisional Patent Application No. 63/242,092, which was filed September 9, 2021, is titled "Cantilever Curved Lens Design To Improve Reliability And Performance In Ultrasonic Lens Cleaning," and to U.S. Patent Application No. 17/691,987, which was filed March 10, 2022, is titled "Bracket Design for Ultrasonic Lens Cleaning".

### BACKGROUND

An ultrasonic cleaning system uses impedance measurement and analysis to clean an object or surface. One example of an ultrasonic cleaning system includes a piezoelectric transducer that is excited using ultrasonic frequencies. The transducer, in turn, excites a surface (e.g. a lens cover or a lens of a camera, such as a camera on an automobile or a drone) that is to be cleaned. The surface vibrates, which shakes off debris and cleans the surface. In the European Search Report the following documents have been cited: WO 2018/085403 relating to an ultrasonic lens cleaning system with impedance monitoring to detect fault or degradation; WO 2017/022382 disclosing a vibrating device and camera.

### SUMMARY

In accordance with at least one example of the description, a system includes an ultrasonic transducer and a bracket coupled to the ultrasonic transducer. The system also includes a lens coupled to the bracket. The system includes a control circuit coupled to the ultrasonic transducer and configured to excite the ultrasonic transducer with a signal to clean the lens.

In accordance with at least one example of the description, a system includes an ultrasonic transducer, where the ultrasonic transducer is a ring transducer having a ring shape. The system includes a bracket coupled to the ring transducer and a lens coupled to the bracket. The system also includes a control circuit coupled to the ring transducer.

In accordance with at least one example of the description, a system includes a piezoelectric transducer coupled to a control circuit configured to excite the piezoelectric transducer. The system also includes a bracket coupled to the piezoelectric transducer. The system includes a curved lens coupled to the bracket, where the bracket is configured to vibrate the curved lens responsive to the control circuit exciting the piezoelectric transducer.

In accordance with at least one example of the description, a system includes a piezoelectric transducer coupled to a control circuit configured to excite the piezoelectric transducer. The system also includes a bracket coupled to the piezoelectric transducer. The system includes a flat lens coupled to the bracket, where the bracket is configured to vibrate the flat lens responsive to the control circuit exciting the piezoelectric transducer.

The invention further discloses a system, comprising an ultrasonic transducer; a bracket coupled to the ultrasonic transducer; a lens coupled to the bracket; and a control circuit coupled to the ultrasonic transducer and configured to excite the ultrasonic transducer with a signal to clean the lens. The ultrasonic transducer may be a cylindrical transducer having a cylinder shape. An outer diameter of the bracket may be aligned with a diameter of the ultrasonic transducer and an inner diameter of the bracket may be aligned with a diameter of the lens. The outer diameter of the bracket may be aligned with a diameter of the lens and an inner diameter of the bracket may be aligned with a diameter of the ultrasonic transducer. The system includes a cantilever coupled to the bracket. The cantilever is of the same material as the lens and is integrated into the lens or into the bracket. The cantilever may protrude outward along an axis of symmetry from an edge of the lens. The lens can be a curved lens or a flat lens.

The invention further discloses a system, comprising an ultrasonic transducer, wherein the ultrasonic transducer is a ring transducer having a ring shape, a bracket coupled to the ring transducer, a lens coupled to the bracket, and a control circuit coupled to the ring transducer. The control circuit can be configured to excite the ring transducer with a signal containing a frequency component to clean the lens. An outer diameter of the ring transducer can be aligned with the bracket. The lens can be a curved lens or a flat lens. A field of view of a camera coupled to the lens can be greater than 100 degrees. A diameter of the lens can be greater than a diameter of the ring transducer. A diameter of the lens can be less than a diameter of the ring transducer.

The invention further discloses a system, comprising a piezoelectric transducer coupled to a control circuit configured to excite the piezoelectric transducer, a bracket coupled to the piezoelectric transducer, and a curved lens coupled to the bracket, wherein the bracket is configured to vibrate the curved lens responsive to the control circuit exciting the piezoelectric transducer. The curved lens can be configured to provide a field of a view of greater than 100 degrees for a camera. A diameter of the curved lens can be less than a diameter of the piezoelectric transducer.

The invention further discloses a system, comprising a piezoelectric transducer coupled to a control circuit configured to excite the piezoelectric transducer, a bracket coupled to the piezoelectric transducer, and a flat lens coupled to the bracket, wherein the bracket is configured to vibrate the flat lens responsive to the control circuit exciting the piezoelectric transducer. The flat lens can be configured to provide a field of a view of greater than 100 degrees for a camera. A diameter of the flat lens can be less than a diameter of the piezoelectric transducer.

### BRIEF DESCRIPTION OF THE DRAWINGS

FIG. 1A is a block diagram of an ultrasonic lens cleaner (ULC) system in accordance with various examples.
FIG. 1B shows two examples of transducer shapes in accordance with various examples.
FIG. 2A is a cross section view of a conventional direct contact design with a cylindrical transducer and a flat lens.
FIG. 2B is a cross section view of a conventional direct contact design with a cylindrical transducer and a flat lens in a housing.
FIG. 2C is a graph of vibration magnitude versus frequency for a conventional direct contact design including a cylindrical transducer and a flat lens.
FIG. 2D is a graph of shear stress versus radial distance for a conventional direct contact design including a cylindrical transducer and a flat lens.
FIG. 3A is a cross section view of a conventional direct contact design including a cylindrical transducer and a curved lens.
FIG. 3B is a cross section view of a conventional direct contact design including a cylindrical transducer and a curved lens in a housing.
FIG. 3C is a graph of vibration magnitude versus frequency for a conventional direct contact design including a cylindrical transducer and a curved lens.
FIG. 3D is a graph of shear stress versus radial distance for a conventional direct contact design including a cylindrical transducer and a curved lens.
FIG. 4A is a cross section view of a bracket design including a cylindrical transducer and a flat lens in accordance with various examples.
FIG. 4B is a cross section view of a bracket design including a cylindrical transducer and a flat lens in a housing in accordance with various examples.
FIG. 4C is a graph of vibration magnitude versus frequency for a bracket design including a cylindrical transducer and a flat lens in accordance with various examples.
FIG. 4D is a graph of shear stress versus radial distance for a bracket design including a cylindrical transducer and a flat lens in accordance with various examples.
FIG. 5A is a cross section view of a bracket design including a ring transducer and a flat lens in accordance with various examples.
FIG. 5B is a cross section view of a bracket design including a ring transducer and a flat lens in a housing in accordance with various examples.
FIG. 5C is a graph of vibration magnitude versus frequency for a bracket design including a ring transducer and a flat lens in accordance with various examples.
FIG. 5D is a graph of shear stress versus radial distance for a bracket design including a ring transducer and a flat lens in accordance with various examples.
FIG. 6A is a cross section view of a bracket design including a cylindrical transducer and a curved lens in accordance with various examples.
FIG. 6B is a cross section view of a bracket design including a cylindrical transducer and a curved lens in accordance with various example.
FIG. 6C is a cross section view of a bracket design including a cylindrical transducer and a curved lens in accordance with various examples.
FIG. 6D is a cross section view of a bracket design including a cylindrical transducer and a curved lens in accordance with various examples.
FIG. 6E is a cross section view of a bracket design including a cylindrical transducer and a curved lens in a housing in accordance with various examples.
FIG. 6F is a graph of vibration magnitude versus frequency for a bracket design including a cylindrical transducer and a curved lens in accordance with various examples.
FIG. 6G is a graph of shear stress versus radial distance for a bracket design including a cylindrical transducer and a curved lens in accordance with various examples.
FIG. 7A is a cross section view of a bracket design including a ring transducer and a curved lens in accordance with various examples.
FIG. 7B is a cross section view of a bracket design including a ring transducer and a curved lens in accordance with various examples.
FIG. 7C is a cross section view of a bracket design including a ring transducer and a curved lens in a housing in accordance with various examples.
FIG. 7D is a graph of vibration magnitude versus frequency for a bracket design including a ring transducer and a curved lens in accordance with various examples.
FIG. 7E is a graph of shear stress versus radial distance for a bracket design including a ring transducer and a curved lens in accordance with various examples.
FIG. 8 is a cross section view of a bracket design including a cylindrical transducer and an integrated curved lens and cantilever in a housing in accordance with various examples.
FIG. 9A is a cross section view of a conventional camera design with a curved lens in a housing.
FIG. 9B is a cross section view of a bracket design including a cylindrical transducer and an integrated curved lens and bracket in a housing in accordance with various examples.

The same reference numbers or other reference designators are used in the drawings to designate the same or similar (functionally and/or structurally) features. The drawings may not accurately reflect the size or scale of the features shown in the drawings.

### DETAILED DESCRIPTION

In many automotive, industrial and personal electronics applications (e.g., machines, equipment, security cameras and drones), as well as other environments, cameras are useful for collecting information about the surroundings or processes via images or video. Camera images may degrade due to dust, debris, rain snow, mud, etc., collecting on the camera lens or lens cover. Traditional cleaning solutions to remove debris include water sprayers, mechanical wipers, or air jets. Water sprayers require water reservoirs and additional tubing for the implementation. Mechanical wipers may be prone to failure and require regular maintenance. Air uses a compressor that may add additional cost to the system and may be noisy. An ultrasonic cleaning system may clean the camera lens or lens cover by exciting a surface to shake off the debris and clean the surface. A transducer may be attached to the lens using epoxy or glue. The transducer is excited by a waveform and vibrates to expel contaminants from the lens and/or lens cover. However, a shear stress occurs in the contact surface between the transducer and the lens/lens cover, which negatively impacts the glue bond between the transducer and the lens/lens cover.

In examples herein, a bracket is coupled to the transducer. The bracket may be any mechanical coupling between a transducer and a lens. The bracket may also contain a cantilever in some examples. The cantilever may be integrated into the bracket or may be integrated into the lens in some examples. The bracket maintains a coupling angle between the bracket and the transducer that is at or close to 90 degrees. With this coupling angle and the modified contact surface due to the introduced bracket, the shear stress between the bracket and the transducer is reduced compared to existing solutions. The shear stress between the bracket and the lens is also reduced in some examples. A reduced shear stress reduces the chances of the glue bond failing. In examples herein, the transducer diameter may be greater than the lens diameter or may be less than the lens diameter. In examples herein, the transducer may be a cylindrical-shaped transducer or a ring-shaped transducer. A number of example bracket geometries are described herein. These geometries are merely exemplary, and other geometries may be used in other examples. In some examples. the bracket geometries may be horizontal, vertical, diagonal, or a combination of multiple horizontal, vertical, and/or diagonal pieces. The bracket and transducer design may allow for a smaller form factor and/or a greater field of view (FOV) for the camera in some examples described herein. In some examples, the vibration magnitude of the lens is increased by implementing the bracket, which improves the cleaning process of the lens and/or decreases power consumption. In examples herein, the transducers may vibrate a lens and/or a lens cover, and the brackets may be coupled to a lens and/or a lens cover.

In some examples herein, the transducer may be surrounded by air. In other examples, the transducers described herein may be vacuum sealed or sealed with an inert gas. For example, the cylindrical cavity inside the cylindrical transducer, or the space in the center of the ring transducer, may be a vacuum sealed space. In some examples, a transducer, lens, lens cover, bracket, camera, and/or other components of the systems described herein may be vacuum sealed, or may reside within a vacuum sealed chamber. Some components may also be sealed with an inert gas in some examples.

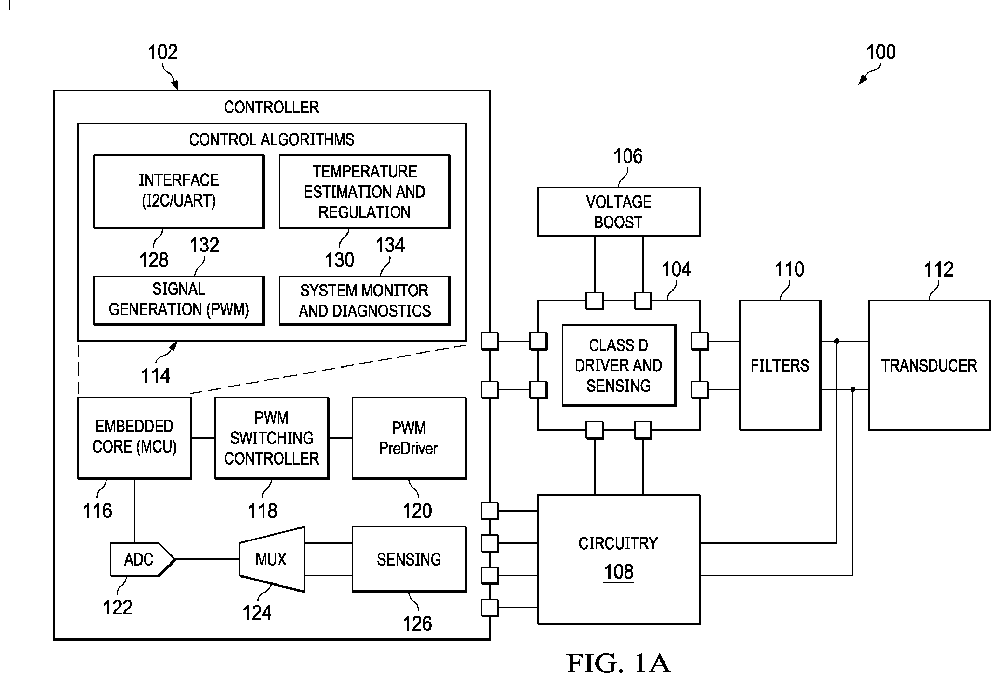

FIG. 1A is a block diagram of an ultrasonic lens cleaner (ULC) system 100 in accordance with various examples described herein. ULC system 100 includes a controller 102, a driver 104, a voltage boost 106, circuitry 108, filters 110, and a transducer 112. Controller 102 includes control algorithms 114, a micro-controller unit (MCU) 116, a pulse-width modulation (PWM) switching controller 118, a PWM pre-driver 120, an analog-to-digital converter (ADC) 122, a multiplexer (MUX) 124, and sensing unit 126. Control algorithms 114 includes interface algorithms 128, temperature algorithms 130, PWM algorithms 132, and system monitor and diagnostic algorithms 134.

ULC system 100 drives, senses, and controls the ultrasonic cleaning system. MCU 116 implements functionality for controller 102 using appropriate algorithms, such as control algorithms 114. For example, interface algorithms 128 manage communications between ULC system 100 and other systems or components (not shown in FIG. 1A). Temperature algorithms 130 estimate and regulate temperature of components in ULC system 100. PWM algorithms 132 control the PWM signals created by controller 102 to vibrate transducer 112. The PWM signal (e.g., the excitation signal) includes a frequency component that excites the transducer 112 to shake debris off the lens or other surface to be cleaned. System monitor and diagnostic algorithms 134 provide additional system monitoring, the details of which are omitted herein. In one example operation, MCU 116 generates excitation signals with a frequency component for cleaning the lens (coupled to transducer 112) and computes the needed PWM switching times for PWM switching controller 118. PWM switching controller 118 signals the PWM pre-driver 120, which provides the on/off signaling to the switches in driver 104. Driver 104 may be a Class D driver with a full H-bridge that provides up to +/- 50 V to the input of the filter 110 in one example. The PWM excitation signal from driver 104 is provided to filters 110, which are designed to smooth the PWM waveform and further boost the peak-to-peak voltage across transducer 112. Filters 110 provide the PWM excitation signal to transducer 112, which excites the transducer 112 to remove debris. Circuitry 108 is sense circuitry that provides current and voltage measurements to sensing unit 126 in controller 102. These current and voltage measurements are sampled by ADC 122. After the current and voltage signals have been sampled, controller 102 computes new PWM signaling, using appropriate control algorithms 114, to adjust the PWM signal (if needed) to improve cleaning performance in ULC system 100.

Any appropriate controller (such as controller 102), processor, control circuitry, hardware, and/or software may be useful to implement the processes described above. The control circuitry or control circuits of ULC system 100 produces the excitation signals for the ultrasonic cleaning system and receives sense information to adjust the excitation signal in order to improve the cleaning performance of the ULC system 100.

In examples herein, a bracket (not shown in FIG. 1A) is coupled to transducer 112. The shape and structure of the bracket is described in further detail below. The bracket may be coupled to a lens and may contain a cantilever. The bracket reduces the shear stress between the transducer and the lens compared to existing configurations. In the examples described herein, the reduction in shear stress reduces the chances of failure of the glue bond between the lens and another component glued to the lens, such as the bracket.

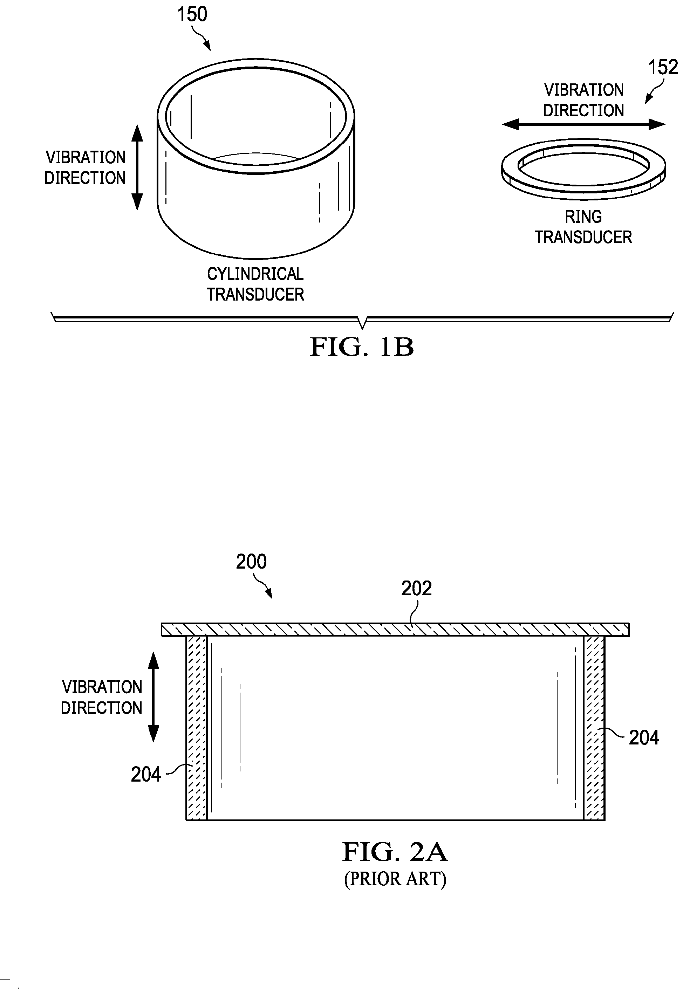

FIG. 1B shows two examples of transducer shapes in accordance with various examples herein. Transducer 150 has a cylindrical shape, and transducer 152 has a ring shape. Either transducer shape may be used in the examples herein, and the shape and structure of the various example transducer/bracket combinations are described below. For a cylindrical transducer 150, the vibration direction is shown as a vertical direction and is parallel with the axis of symmetry for the cylinder. For a ring transducer 152, the vibration direction is shown as a horizontal direction and is perpendicular to the axis of symmetry for the ring. The various combinations of these transducers with different bracket and lens designs are described below.

FIG. 2A is a cross section view of a conventional direct contact design 200 with a flat lens. Design 200 includes a flat lens 202 and a transducer 204. The transducer 204 vibrates in a vertical direction in this design. The transducer 204 may be a cylindrical transducer in this example. The flat lens 202 directly contacts the transducer 204 in this design. A shear stress occurs in the contact surface between the transducer 204 and the flat lens 202, as described below, which negatively impacts the glue bond between the transducer 204 and the flat lens 202.

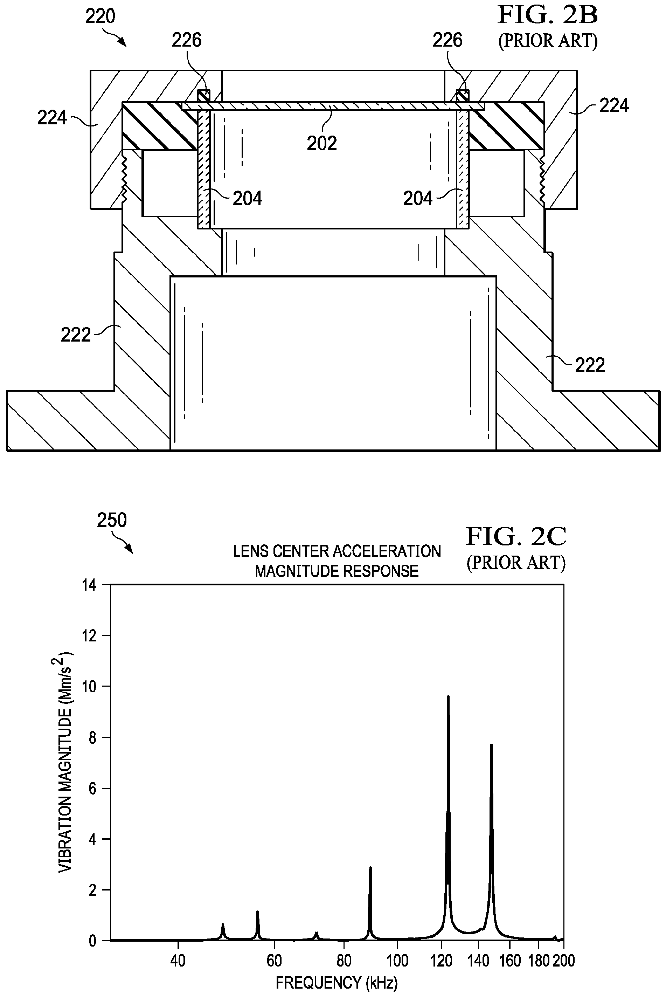

FIG. 2B is a cross section view of a conventional direct contact design 220 with a flat lens in a housing. Design 220 includes a flat lens 202, transducer 204, housing base 222, housing cap 224, and gasket 226. The transducer 204 vibrates in a vertical direction in this design.

FIG. 2C is a graph 250 of vibration magnitude versus frequency for a conventional direct contact design with a flat lens as shown in FIG. 2A. In graph 250, the x-axis represents the frequency in kHz of the excitation signal that excites the transducer. The y-axis represents the vibration magnitude of the center of the lens in megameters per second squared (Mm/s²). In the direct contact design with a flat lens 202 and cylindrical transducer 204 as shown in FIG. 2A, the vibration magnitude reaches approximately 10 Mm/s² at approximately 125 kHz.

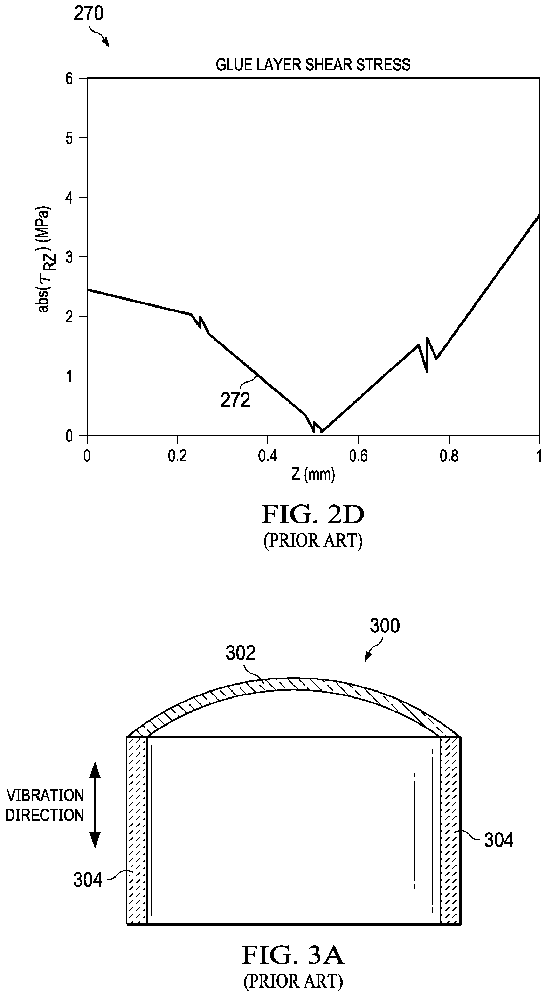

FIG. 2D is a graph 270 of shear stress versus radial distance for a conventional direct contact design including a cylindrical transducer and a flat lens as shown in FIG. 2A. In graph 270, the x-axis represents a radial distance in millimeters (mm) along the surface contact area between the transducer 204 surface and the surface of the component that is glued to transducer 204 (in this case, a flat lens 202). The y-axis represents the shear stress measured in megapascals (MPa).

Graph 270 has a curve 272 that shows the shear stress for a conventional direct contact design, where a transducer 204 is glued directly to a flat lens 202. In this example, the shear stress spikes above 2 MPa over parts of the radial distance. These levels of shear stress can increase the likelihood of failure of the glue bond between the transducer and the lens.

FIG. 3A is a cross section view of a conventional direct contact design 300 with a curved lens. Design 300 includes a curved lens 302 and a transducer 304. The transducer 304 vibrates in a vertical direction in this design. The transducer 304 may be a cylindrical transducer in this example. The curved lens 302 directly contacts the transducer 304 in this design. A shear stress occurs in the contact surface between the transducer 304 and the curved lens 302 as described below, which negatively impacts the glue bond between the transducer 304 and the curved lens 302.

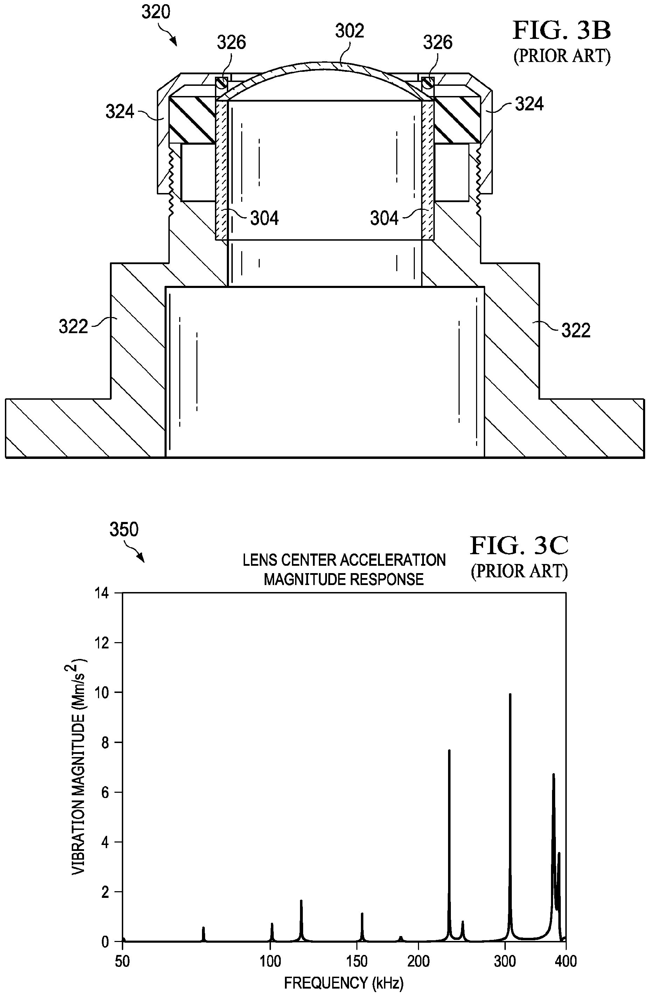

FIG. 3B is a cross section view of a conventional direct contact design 320 with a curved lens in a housing. Design 320 includes a curved lens 302, transducer 304, housing base 322, housing cap 324, and gasket 326. The transducer 304 vibrates in a vertical direction in this design.

FIG. 3C is a graph 350 of vibration magnitude for a conventional direct contact design with a curved lens as shown in FIG. 3A. In graph 350, the x-axis represents the frequency in kHz of the excitation signal that excites the transducer. The y-axis represents the vibration magnitude of the center of the lens in Mm/s². In the direct contact design with a curved lens 302 and cylindrical transducer 304 as shown in FIG. 3A, the vibration magnitude reaches approximately 10 Mm/s² at approximately 300 kHz.

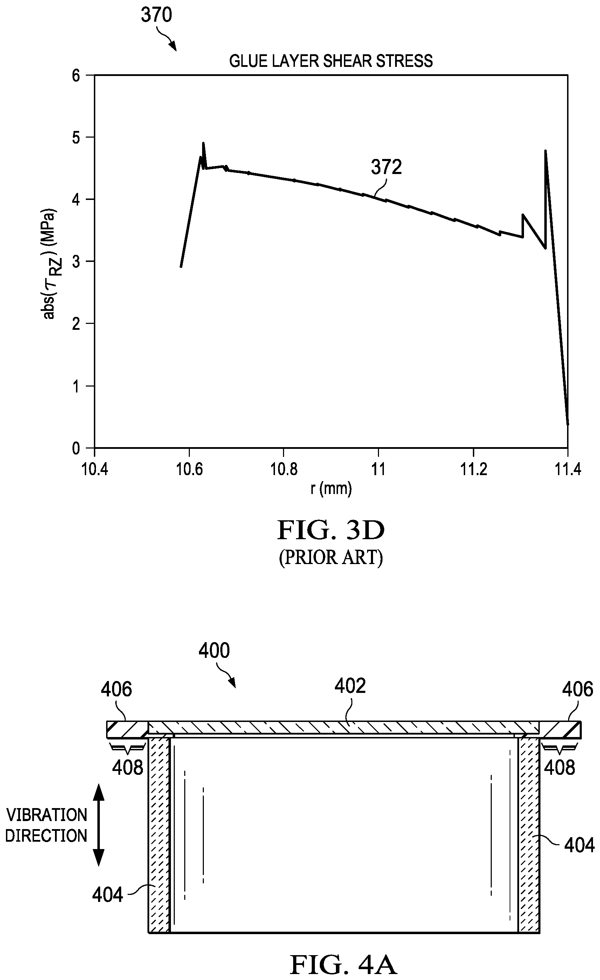

FIG. 3D is a graph 370 of shear stress versus radial distance for a conventional direct contact design for a cylindrical transducer and a curved lens as shown in FIG. 3A. In graph 370, the x-axis represents a radial distance in mm measured from the cylindrical transducer's axis of symmetry, which is the location along the surface contact area between the transducer 304 surface and the surface of the component that is glued to transducer 304 (in this case, a curved lens 302). The y-axis represents the shear stress measured in MPa.

Graph 370 has a curve 372 that shows the shear stress for a conventional direct contact design, where a transducer 304 is glued directly to a curved lens 302. In this example, the shear stress is above 3 MPa for most of the radial distance, and spikes above 4 MPa over parts of the radial distance. These levels of shear stress can increase the likelihood of failure of the glue bond between the transducer and the lens.

FIG. 4A is a cross section view of a bracket design 400 including a cylindrical transducer 404 and a flat lens 402 in accordance with various examples herein. In this example, design 400 includes flat lens 402, cylindrical transducer 404, and bracket 406 with an integrated cantilever 408. Bracket 406 may align with cylindrical transducer 404 in one example. Bracket 406 may be coupled to cylindrical transducer 404 with an epoxy or glue. Cylindrical transducer 404 vibrates in a vertical direction as shown by the arrow in FIG. 4A. Therefore, the shear stress between the cylindrical transducer 404 and the bracket 406 is low at the surface where the two components meet. Also, in this example, the diameter of cylindrical transducer 404 may be greater than, less than, or equal to the diameter of flat lens 402.

Cylindrical transducer 404, and any other transducer described herein, may be made of a piezoelectric material. Piezoelectric materials are materials that can produce electric energy upon application of mechanical stress. In general, these materials may achieve high electromechanical energy conversion efficiency. Bracket 406 may be made of any suitable material. In some examples, bracket 406 may be plastic, or a metal such as aluminum. Bracket 406 may be glass in another example. Flat lens 402 may be glass or plastic, or any suitable lens material. Flat lens 402 may be coupled to bracket 406 with an epoxy or glue. Cantilever 408 may be made of the same material as bracket 406 in some examples. Cantilever 408 may extend any distance beyond cylindrical transducer 404. In some examples, cantilever 408 may be an extension of flat lens 402, and may be made of the same material as flat lens 402.

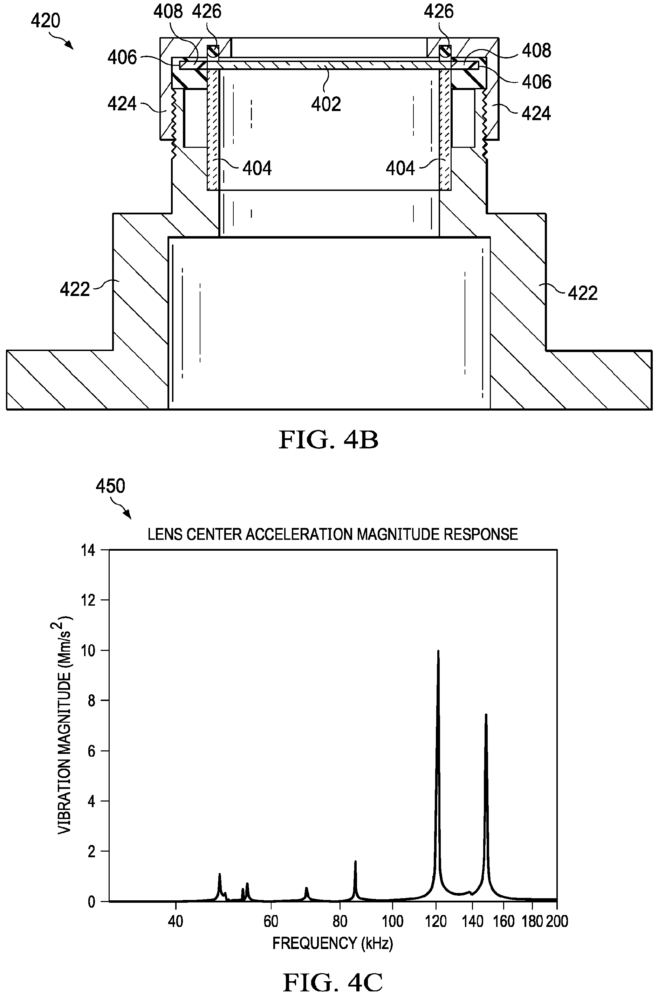

FIG. 4B is a cross section view of a bracket design 420 including a cylindrical transducer and a flat lens in a housing in accordance with various examples herein. Bracket design 420 includes a flat lens 402, cylindrical transducer 404, bracket 406 with an integrated cantilever 408, housing base 422, housing cap 424, and gasket 426. The cylindrical transducer 404 vibrates in a vertical direction in this design.

FIG. 4C is a graph 450 of vibration magnitude versus frequency for a bracket design with a cylindrical transducer and a flat lens in accordance with various examples herein. In graph 450, the x-axis represents the frequency of the excitation signal that excites the transducer in kHz. The y-axis represents the vibration magnitude of the center of the lens in Mm/s². In the bracket design with a flat lens 402 and cylindrical transducer 404 as shown in FIG. 4A, the vibration magnitude reaches approximately 10 Mm/s² at approximately 120 kHz.

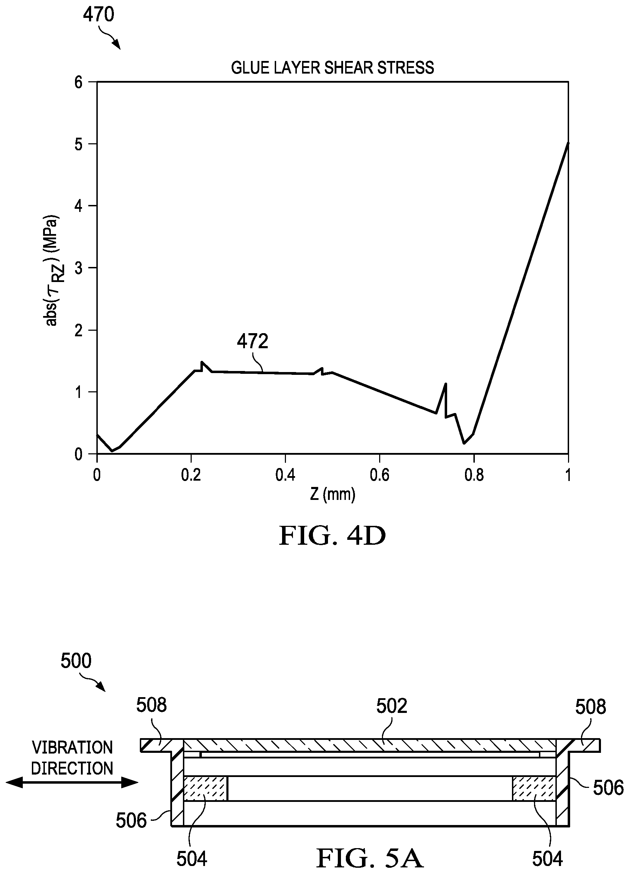

FIG. 4D is a graph 470 of shear stress versus radial distance for a bracket design with a cylindrical transducer and a flat lens in accordance with various examples herein. In graph 470, the x-axis represents a radial distance in mm along the surface contact area between the cylindrical transducer 404 surface and the surface of the component that is glued to cylindrical transducer 404 (in this case, a bracket 406). The y-axis represents the shear stress measured in MPa.

Graph 470 has a curve 472 that shows the shear stress for a bracket design with a cylindrical transducer and a flat lens, where a cylindrical transducer 404 is glued to a bracket 406 rather than to a flat lens 402. In this example, the shear stress is below 2 MPa over most of the radius, but may have a higher shear stress near one edge as shown in graph 470.

FIG. 5A is a cross section view of a bracket design 500 including a ring transducer 504 and a flat lens 502 in accordance with various examples herein. The ring transducer 504 may be surrounded by air in some examples, or may be vacuum sealed or sealed with an inert gas in other examples. In this example, bracket design 500 includes flat lens 502, ring transducer 504, bracket 506, and cantilever 508. Bracket 506 may align with ring transducer 504 in one example. Bracket 506 may be coupled to ring transducer 504 with an epoxy or glue. Ring transducer 504 vibrates in a horizontal direction as shown by the arrow in FIG. 5A. The shear stress between the ring transducer 504 and the bracket 506 is low at the surface where the two components meet. Also, in this example, the diameter of ring transducer 504 may be greater than, less than, or equal to the diameter of flat lens 502.

Flat lens 502, bracket 506, and cantilever 508 may be made of similar materials as the corresponding components described above with respect to FIG. 4A (e.g., lens 402, bracket 406, and cantilever 408). Flat lens 502 may be coupled to bracket 506 with an epoxy or glue. Cantilever 508 may extend any distance beyond ring transducer 504. In some examples, cantilever 508 may be an extension of flat lens 502, and is made of the same material as flat lens 502.

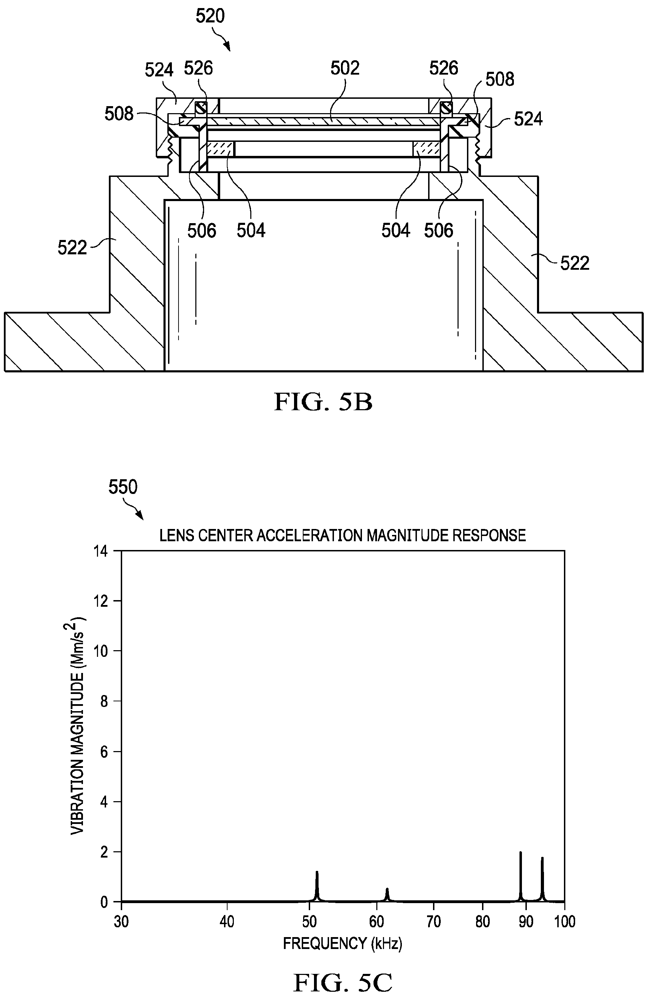

FIG. 5B is a cross section view of a bracket design 520 including a ring transducer and a flat lens in a housing in accordance with various examples herein. Bracket design 520 includes a flat lens 502, ring transducer 504, bracket 506, cantilever 508, housing base 522, housing cap 524, and gasket 526. The ring transducer 504 vibrates in a horizontal direction in this design.

FIG. 5C is a graph 550 of vibration magnitude versus frequency for a bracket design with a ring transducer and a flat lens in accordance with various examples herein. In graph 550, the x-axis represents the frequency in kHz of the excitation signal that excites the transducer. The y-axis represents the vibration magnitude of the center of the lens in Mm/s². In the bracket design with a flat lens 502 and ring transducer 504 as shown in FIG. 5A, the vibration magnitude reaches approximately 2 Mm/s² at approximately 90 kHz.

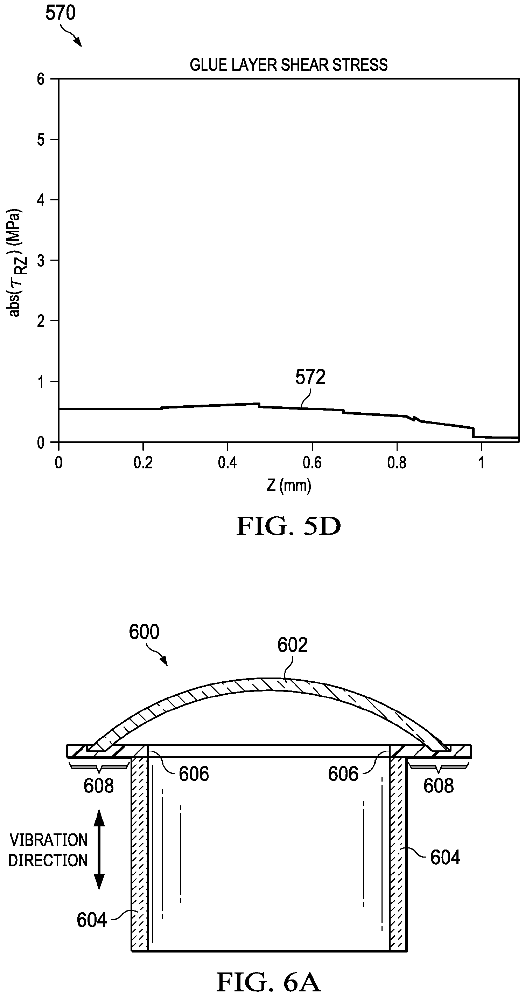

FIG. 5D is a graph 570 of shear stress versus radial distance for a bracket design with a ring transducer and a flat lens in accordance with various examples herein. In graph 570, the x-axis represents a radial distance in mm along the surface contact area between the ring transducer 504 surface and the surface of the component that is glued to ring transducer 504 (in this case, a bracket 506). The y-axis represents the shear stress measured in MPa.

Graph 570 has a curve 572 that shows the shear stress for a bracket design with a ring transducer and a flat lens, where a ring transducer 504 is glued to a bracket 506 rather than to a flat lens 502. In this example, the shear stress is below 1 MPa over most of the radius. Compared to the conventional direct contact design shown in FIGS. 2A-2D, the shear stress in the example of FIG. 5A is much lower, which reduces the chances of the glue bond failing. Also, in some examples, the shear strength of the glue is approximately 13.8 MPa (e.g., the shear level when glue failure occurs). The factor of safety before failure is greatly increased with the bracket designs described in examples herein.

FIGS. 6A to 6E show cross section views of bracket designs with cylindrical transducers and curved lens in accordance with various examples herein. FIG. 6A is a cross section view of a bracket design 600 including a cylindrical transducer and a curved lens in accordance with various examples herein. Bracket design 600 includes a horizontal cantilever and a lens diameter greater than the transducer diameter. Bracket design 600 includes a curved lens 602, a cylindrical transducer 604, and a bracket 606 with an integrated cantilever 608. The center cavity of cylindrical transducer 604 may include air, an inert gas, or may be vacuum sealed in some examples. An inner diameter of bracket 606 may be aligned with a diameter of cylindrical transducer 604. Bracket 606 may be coupled to cylindrical transducer 604 with an epoxy or glue. Cylindrical transducer 604 vibrates in a vertical direction as shown by the arrow in FIG. 6A. Therefore, the shear stress between the cylindrical transducer 604 and the bracket 606 is low at the surface where the two components meet. Curved lens 602, bracket 606, and cantilever 608 may be made of similar materials as the corresponding components described above with respect to FIG. 4A (e.g., flat lens 402, bracket 406, and cantilever 408). Curved lens 602 may be coupled to bracket 606 or cantilever 608 with an epoxy or glue. Cantilever 608 may extend any distance beyond cylindrical transducer 604. In some examples, cantilever 608 may be an extension of curved lens 602, and is made of the same material as curved lens 602.

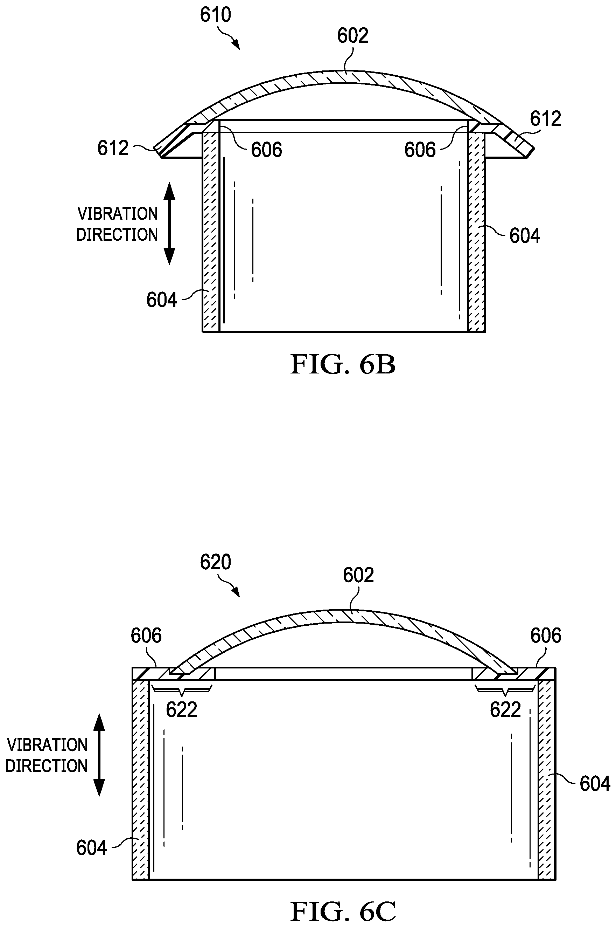

FIG. 6B is a cross section view of a bracket design 610 including a cylindrical transducer and a curved lens in accordance with various examples herein. Bracket design 610 includes a sloped cantilever 612 and a curved lens 602 diameter greater than the cylindrical transducer 604 diameter. Bracket design 610 includes a curved lens 602, a cylindrical transducer 604, a bracket 606, and a sloped cantilever 612. An outer diameter of bracket 606 may be aligned with a diameter of curved lens 602. Bracket 606 may align with an edge of the curved lens 602 in some examples. Bracket 606 may be coupled to cylindrical transducer 604 with an epoxy or glue. Cylindrical transducer 604 vibrates in a vertical direction as shown by the arrow in FIG. 6B. Therefore, the shear stress between the cylindrical transducer 604 and the bracket 606 is low at the surface where the two components meet. Curved lens 602, bracket 606, and cantilever 612 may be made of similar materials as the corresponding components described above with respect to FIG. 4A (e.g., lens 402, bracket 406, and cantilever 408). Curved lens 602 may be coupled to bracket 606 and/or cantilever 612 with an epoxy or glue. Cantilever 612 may extend any distance beyond cylindrical transducer 604. In some examples, cantilever 612 may be an extension of curved lens 602, and may be made of the same material as curved lens 602.

FIG. 6C is a cross section view of a bracket design 620 including a cylindrical transducer and a curved lens in accordance with various examples herein. Bracket design 620 includes a horizontal cantilever 622 and a curved lens 602 diameter less than the cylindrical transducer 604 diameter. Bracket design 620 includes a curved lens 602, a cylindrical transducer 604, a bracket 606, and a horizontal cantilever 622. An outer diameter of the bracket 606 may be aligned with a diameter of the cylindrical transducer 604, and an inner diameter of the bracket 606 may be aligned with a diameter of the curved lens 602. The bracket 606 may align with an edge of the curved lens 602 in some examples. Bracket 606 may be coupled to cylindrical transducer 604 with an epoxy or glue. Cylindrical transducer 604 vibrates in a vertical direction as shown by the arrow in FIG. 6C. Therefore, the shear stress between the cylindrical transducer 604 and the bracket 606 is low at the surface where the two components meet. Curved lens 602, bracket 606, and horizontal cantilever 622 may be made of similar materials as the corresponding components described above with respect to FIG. 4A (e.g., lens 402, bracket 406, and cantilever 408). Curved lens 602 may be coupled to bracket 606 and/or horizontal cantilever 622 with an epoxy or glue. Horizontal cantilever 622 may extend any distance towards the center of cylindrical transducer 604. In some examples, horizontal cantilever 622 may be made of the same material as curved lens 602.

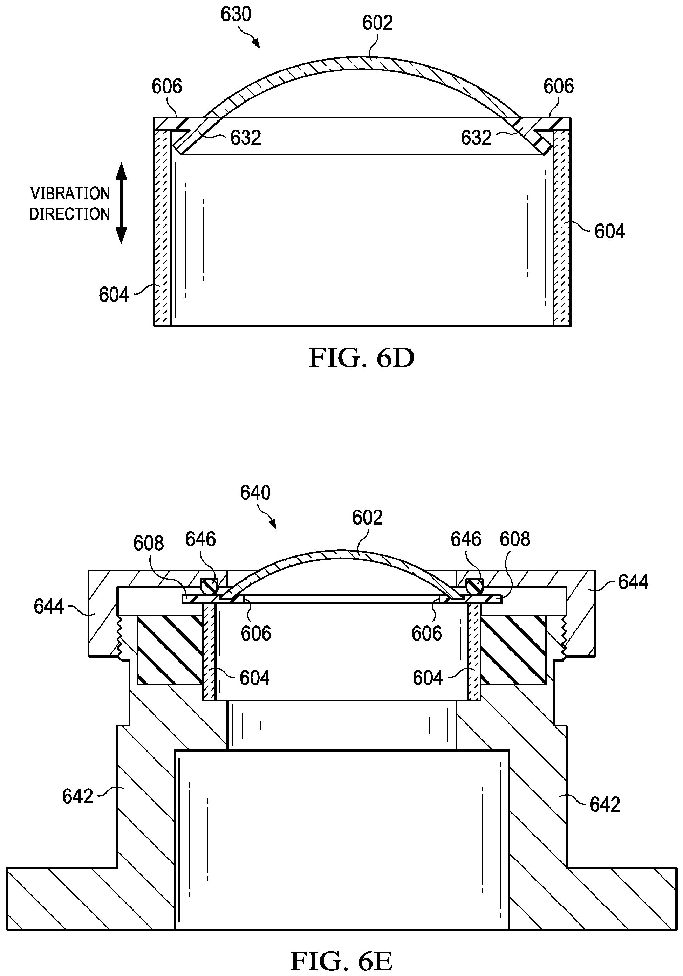

FIG. 6D is a cross section view of a bracket design 630 including a cylindrical transducer 604 and a curved lens 602 in accordance with various examples herein. Bracket design 630 includes a sloped cantilever 632 and a curved lens 602 with a diameter less than the cylindrical transducer 604 diameter. Bracket design 630 includes a curved lens 602, a cylindrical transducer 604, a bracket 606, and a sloped cantilever 632. Bracket 606 may be aligned with cylindrical transducer 604 in some examples. Bracket 606 may be aligned with curved lens 602 in some examples. Bracket 606 may be coupled to cylindrical transducer 604 with an epoxy or glue. Cylindrical transducer 604 vibrates in a vertical direction as shown by the arrow in FIG. 6D. Therefore, the shear stress between the cylindrical transducer 604 and the bracket 606 is low at the surface where the two components meet. Curved lens 602, bracket 606, and cantilever 632 may be made of similar materials as the corresponding components described above with respect to FIG. 4A (e.g., lens 402, bracket 406, and cantilever 408). Curved lens 602 may be coupled to bracket 606 and/or cantilever 632 with an epoxy or glue. Cantilever 632 may extend any distance below curved lens 602. In some examples, cantilever 632 may be an extension of curved lens 602, and may be made of the same material as curved lens 602.

FIG. 6E is a cross section view of a bracket design 640 including a cylindrical transducer and a curved lens in a housing in accordance with various examples herein. Bracket design 640 includes (similar to the example of FIG. 6C) a cantilever 608 and a curved lens 602 with a diameter less than the cylindrical transducer 604 diameter. Bracket design 640 includes a curved lens 602, a cylindrical transducer 604, a bracket 606, a cantilever 608, a housing base 642, a housing cap 644, and a gasket 646. Cylindrical transducer 604 vibrates in a vertical direction in this example.

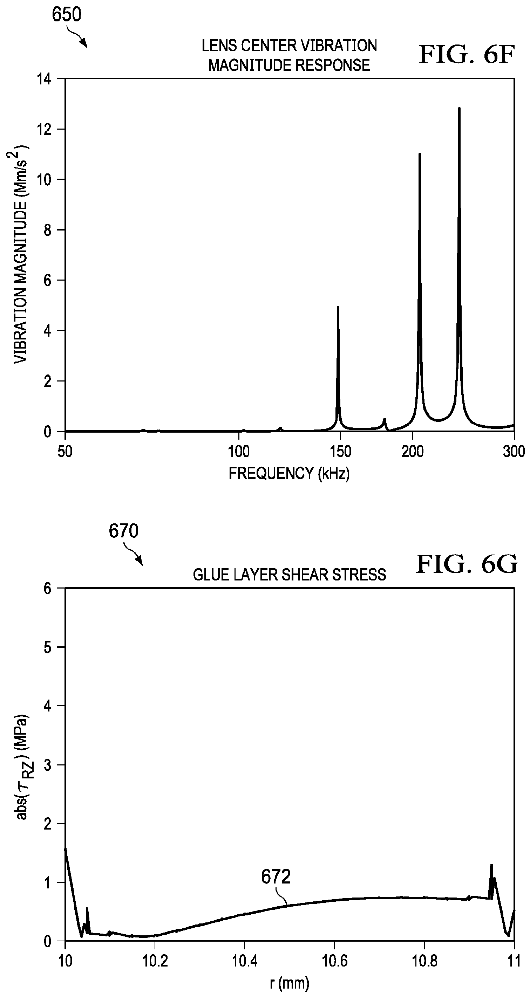

FIG. 6F is a graph 650 of vibration magnitude versus frequency for a bracket design with a cylindrical transducer and a curved lens in accordance with various examples herein. In graph 650, the x-axis represents the frequency in kHz of the excitation signal that excites the transducer. The y-axis represents the vibration magnitude of the center of the lens in Mm/s². In an example bracket design with a curved lens 602 and cylindrical transducer 604, the vibration magnitude reaches approximately 13 Mm/s² at approximately 250 kHz. This vibration magnitude is higher in FIG. 6F than the vibration magnitudes for the conventional designs shown in FIGS. 2C and 3C. A higher vibration magnitude for the lens center provides better cleaning properties for the ultrasonic cleaning system.

FIG. 6G is a graph 670 of shear stress versus radial distance for a bracket design with a cylindrical transducer and a curved lens in accordance with various examples herein. In graph 670, the x-axis represents a radial distance in mm measured from the cylindrical transducer's axis of symmetry, which is the location along the surface contact area between the cylindrical transducer 604 surface and the surface of the component that is glued to cylindrical transducer 604 (in this case, a bracket 606). The y-axis represents the shear stress measured in MPa.

Graph 670 has a curve 672 that shows the shear stress for bracket design with a cylindrical transducer and a curved lens, where a cylindrical transducer 604 is glued to a bracket 606 rather than to a curved lens 602. In this example, the shear stress is below 1 MPa over most of the radius. Compared to the conventional direct contact design shown in FIGS. 3A-3D, the shear stress in the example of FIG. 6G is much lower, which reduces the chances of the glue bond failing.

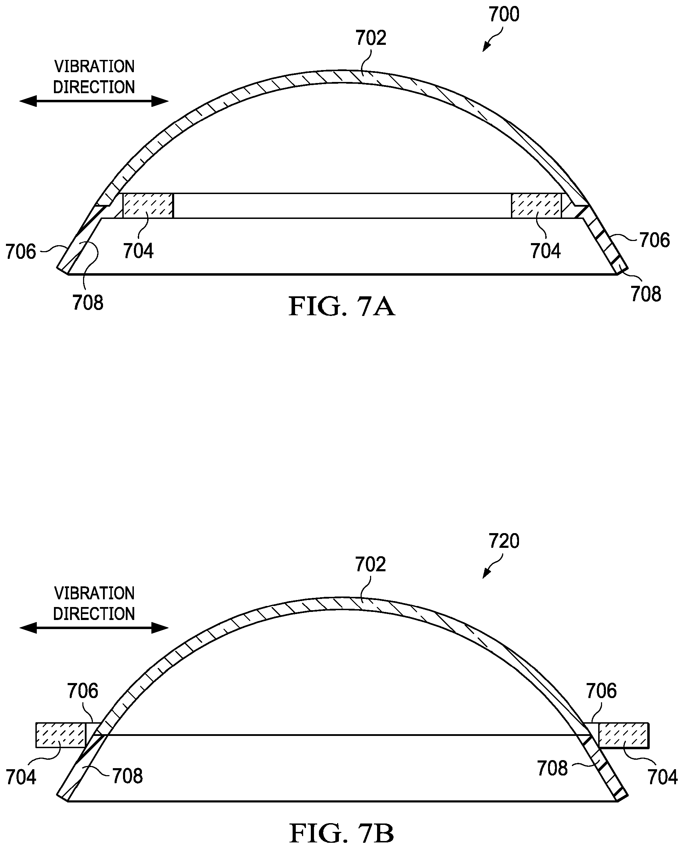

FIG. 7A is a cross section view of a bracket design 700 including a ring transducer and a curved lens in accordance with various examples herein. Bracket design 700 includes a sloped cantilever 708 and a curved lens 702 diameter greater than the ring transducer 704 diameter. Bracket design 700 includes a curved lens 702, a ring transducer 704, a bracket 706, and a cantilever 708. Bracket 706 may be aligned with ring transducer 704 in some examples. Bracket 706 may be aligned with an edge of curved lens 702 in some examples. Bracket 706 may be coupled to ring transducer 704 with an epoxy or glue. Ring transducer 704 vibrates in a horizontal direction as shown by the arrow in FIG. 7A. Therefore, the shear stress between the ring transducer 704 and the bracket 706 is low at the surface where the two components meet. Curved lens 702, bracket 706, and cantilever 708 may be made of similar materials as the corresponding components described above with respect to FIG. 4A (e.g., lens 402, bracket 406, and cantilever 408). Curved lens 702 may be coupled to bracket 706 and/or cantilever 708 with an epoxy or glue. Cantilever 708 may extend any distance beyond ring transducer 704. In some examples, cantilever 708 may be an extension of curved lens 702, and may be made of the same material as curved lens 702.

FIG. 7B is a cross section view of a bracket design 720 including a ring transducer and a curved lens in accordance with various examples herein. Bracket design 720 includes a sloped cantilever 708 and a curved lens 702 diameter less than the ring transducer 704 diameter. Bracket design 720 includes a curved lens 702, a ring transducer 704, a bracket 706, and a cantilever 708. Bracket 706 may be aligned with ring transducer 704 in some examples. Bracket 706 may be aligned with an edge of curved lens 702 in some examples. Bracket 706 may be coupled to ring transducer 704 with an epoxy or glue. Ring transducer 704 vibrates in a horizontal direction as shown by the arrow in FIG. 7B. Therefore, the shear stress between the ring transducer 704 and the bracket 706 is low at the surface where the two components meet. Curved lens 702, bracket 706, and cantilever 708 may be made of similar materials as the corresponding components described above with respect to FIG. 4A (e.g., lens 402, bracket 406, and cantilever 408). Curved lens 702 may be coupled to bracket 706 and/or cantilever 708 with an epoxy or glue. Cantilever 708 may extend any distance below ring transducer 704. In some examples, cantilever 708 may be an extension of curved lens 702, and may be made of the same material as curved lens 702.

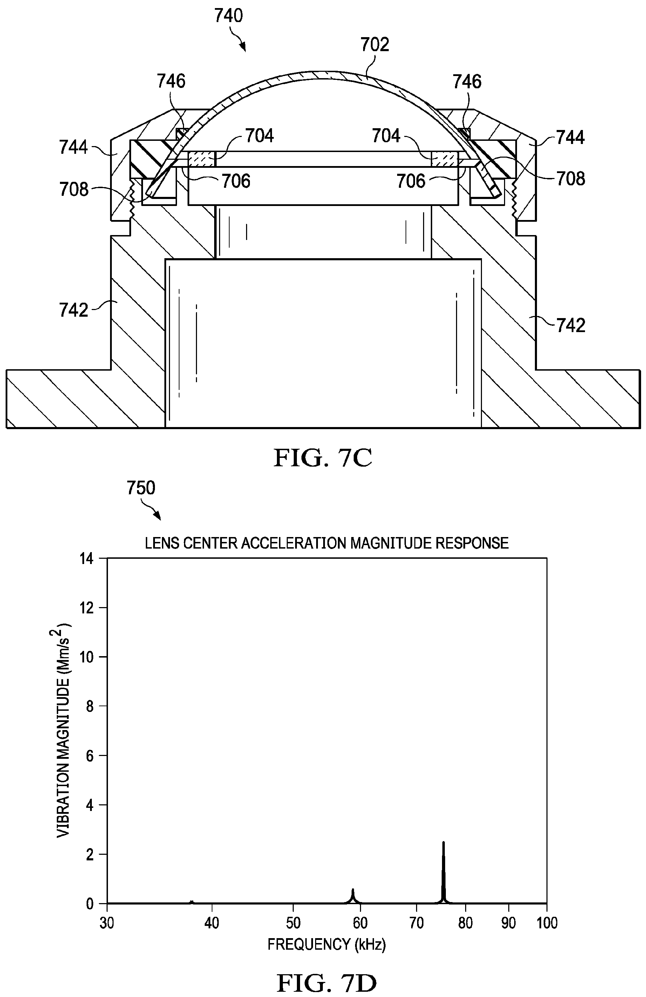

FIG. 7C is a cross section view of a bracket design 740 including a ring transducer and a curved lens in a housing in accordance with various examples herein. Bracket design 740 includes (similar to the example illustrated in FIG. 7B) a sloped cantilever 708 and a curved lens 702 diameter greater than the ring transducer 704 diameter. Bracket design 740 includes a curved lens 702, a ring transducer 704, a bracket 706, a sloped cantilever 708, a housing base 742, a housing cap 744, and a gasket 746. Ring transducer 704 vibrates in a horizontal direction in this example.

FIG. 7D is a graph 750 of vibration magnitude versus frequency for a bracket design with a ring transducer and a curved lens in accordance with various examples herein. In graph 750, the x-axis represents the frequency in kHz of the excitation signal that excites the transducer. The y-axis represents the vibration magnitude of the center of the lens in Mm/s². In an example bracket design with a curved lens 702 and ring transducer 704, the vibration magnitude reaches approximately 2.5 Mm/s² at approximately 75 kHz.

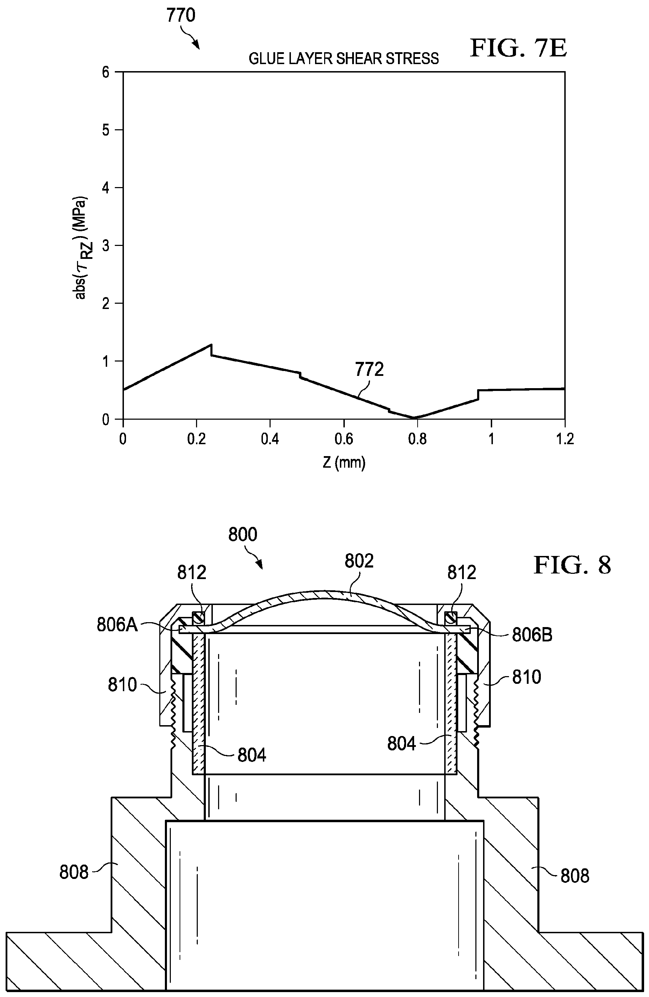

FIG. 7E is a graph 770 of shear stress versus radial distance for a bracket design with a ring transducer and a curved lens in accordance with various examples herein. In graph 770, the x-axis represents a radial distance in mm along the surface contact area between the ring transducer 704 surface and the surface of the component that is glued to ring transducer 704 (in this case, a bracket 706). The y-axis represents the shear stress measured in MPa.

Graph 770 has a curve 772 that shows the shear stress for a bracket design with a ring transducer and a curved lens, where a ring transducer 704 is glued to a bracket 706 rather than to a curved lens 702. In this example, the shear stress is below 1 MPa over most of the radius. Compared to the conventional direct contact design shown in FIGS. 3A-3D, the shear stress in the example of FIG. 7E is much lower, which reduces the chances of the glue bond failing.

FIG. 8 is a cross section view of a bracket design 800 including a cylindrical transducer and an integrated curved lens and cantilever in a housing in accordance with various examples. Bracket design 800 includes a lens 802 and a cylindrical transducer 804. In bracket design 800, lens 802 is integrated with the cantilever, and therefore lens 802 includes cantilever portions 806A and 806B. Bracket design 800 also includes a housing base 808, a housing cap 810, and a gasket 812. In this example, cylindrical transducer 804 is glued to cantilever portions 806A and 806B of lens 802. By gluing cylindrical transducer 804 to cantilever portions 806A and 806B rather than directly to lens 802, the shear stress at the glue layer is lower than with the conventional designs in FIGS. 2A-3D. The cantilever portions 806A and 806B maintain a coupling angle between themselves and the cylindrical transducer 804 that is at or close to 90 degrees, which reduces the shear stress at the shared contact surface. Bracket design 800 shows one example of how a cantilever may be integrated with a curved lens. Other examples may be implanted, such as a flat lens with a cantilever portion.

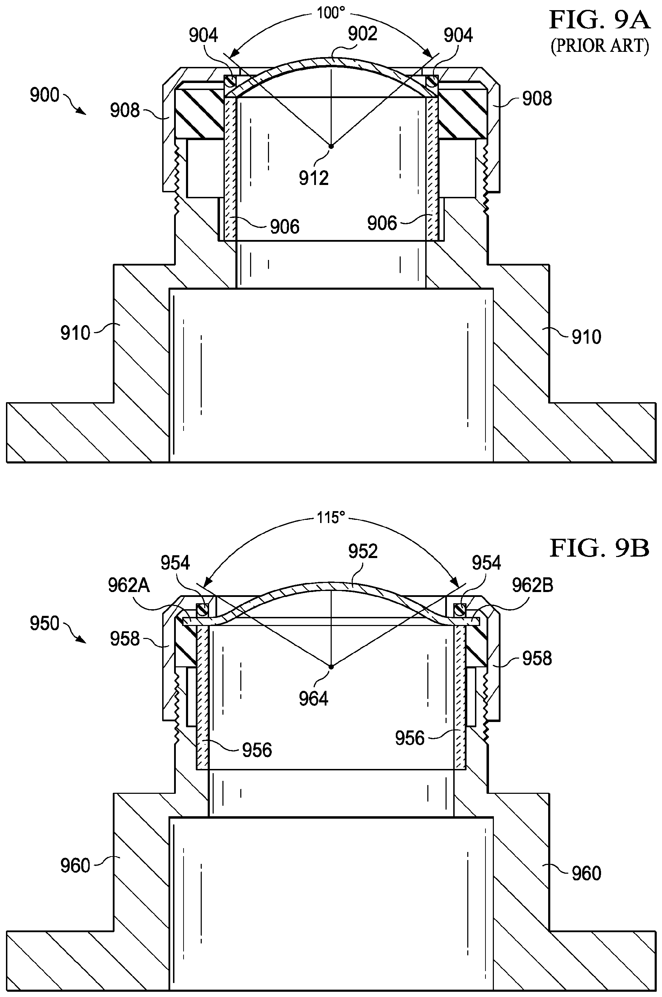

FIG. 9A is a cross section view of a conventional camera design 900 with a curved lens in a housing. FIG. 9B is a cross section view of a bracket design 950 including a cylindrical transducer and an integrated curved lens and bracket (similar to the example illustrated in FIG. 8) in a housing in accordance with various examples. FIGS. 9A and 9B show that an increase in field of view (FOV) for the camera may be achieved in some examples with a bracket housing design, such as the design shown in FIG. 9B

In the conventional design of FIG. 9A, design 900 includes a curved lens 902, a gasket 904, a transducer 906, a housing cap 908, and a housing base 910. In this conventional direct contact design, the curved lens 902 is glued directly to the transducer 906. The focal point 912 of curved lens 902 is approximately 6.5 millimeters (mm) below curved lens 902. Therefore, the FOV is roughly 100 degrees.

In the example of FIG. 9B, bracket design 950 includes a curved lens 952, a gasket 954, a transducer 956, a housing cap 958, and a housing base 960. In bracket design 950, the curved lens 952 includes flat cantilever portions 962A and 962B that are glued to the transducer 956. The coupling angle between the respective cantilever portions 962A and 962B and the transducer 956 is 90 degrees. The focal point 964 of curved lens 952 is 6.5 mm below curved lens 952. Therefore, the FOV is roughly 115 degrees. With this design, the FOV may be improved because the gasket 954 and housing cap 958 may be located beyond the curved portion of curved lens 952, such as on the flat cantilever portions 962A and 962B of the curved lens 952. In contrast, in the conventional design 900 in FIG. 9A, the gasket 904 is located along the curved portion of the curved lens 902, which impedes the FOV.

Examples described herein improve the reliability and performance of an ultrasonic cleaning system. A bracket may be coupled to the lens or may be incorporated into the lens in some examples. The bracket may also contain a cantilever in some examples. The bracket helps to reduce the shear stress between the bracket and the transducer, compared to existing solutions. The shear stress between the bracket and the lens is also reduced in some examples. In examples herein, the transducer may be a cylindrical-shaped transducer or a ring-shaped transducer. The bracket and transducer design may allow for a smaller form factor and/or a greater FOV for the camera in some examples described herein. Also, in some examples, the vibration magnitude of the lens is increased by implementing the bracket, which improves the cleaning process of the lens.

The term "couple" is used throughout the specification. The term may cover connections that enable a functional relationship consistent with this description. For example, a device A may be directly coupled to a device B. In another example, device A may be coupled to device B through an intervening component device C.

A device that is "configured to" perform a task or function may be configured (e.g., programmed and/or hardwired) at a time of manufacturing by a manufacturer to perform the function and/or may be configurable (or re-configurable) by a user after manufacturing to perform the function and/or other additional or alternative functions. The configuring may be through firmware and/or software programming of the device, through a construction and/or layout of hardware components and interconnections of the device, or a combination thereof.

Unless otherwise stated, "about," "approximately," or "substantially" preceding a value means +/- 10 percent of the stated value. Modifications are possible in the described examples, and other examples are possible within the scope of the claims.

## Claims

1. A system (100), comprising:
an ultrasonic transducer (404);
a bracket (406) coupled to the ultrasonic transducer (404);
a lens (402) coupled to the bracket (406); and
a control circuit (108) coupled to the ultrasonic transducer (404) and configured to excite the ultrasonic transducer with a signal to clean the lens (402);
**characterized in that** the system includes a cantilever (408) coupled to the bracket (406) and wherein the cantilever (408) is integrated into the lens (402) or into the bracket (406) and wherein the cantilever (408) is of the same material as the lens (402).

2. The system of claim 1, wherein the cantilever protrudes outward along an axis of symmetry from an edge of the lens.

3. The system of any of the preceding claims, wherein the ultrasonic transducer is a cylindrical transducer having a cylinder shape.

4. The system of any of claims 1 to 2, wherein the ultrasonic transducer is a ring transducer having a ring shape.

5. The system of claim 4, wherein an outer diameter of the ring transducer is aligned with the bracket.

6. The system of claim 4 or 5, wherein a diameter of the lens is greater than a diameter of the ring transducer.

7. The system of claim 4 or 5, wherein a diameter of the lens is less than a diameter of the ring transducer.

8. The system of any of claims 4 to 7, wherein an outer diameter of the bracket is aligned with a diameter of the ultrasonic transducer and an inner diameter of the bracket is aligned with a diameter of the lens.

9. The system of any of claims 4 to 7, wherein an outer diameter of the bracket is aligned with a diameter of the lens and an inner diameter of the bracket is aligned with a diameter of the ultrasonic transducer.

10. The system of any of the preceding claims, wherein the lens is a curved lens or is a flat lens.

11. The system of any of the preceding claims, wherein the lens is a flat lens.

12. The system of any of the preceding claims, wherein the lens is configured to provide a field of a view of greater than 100 degrees for a camera.

13. The system of claim 12, wherein the lens is a curved lens.

14. The system of claim 13, wherein a diameter of the curved lens is less than a diameter of the ultrasonic transducer.

## Patentansprüche

1. System (100), das Folgendes umfasst:
einen Ultraschallwandler (404);
eine Halterung (406), die mit dem Ultraschallwandler (404) gekoppelt ist;
eine Linse (402), die mit der Halterung (406) gekoppelt ist; und
eine Steuerschaltung (108), die mit dem Ultraschallwandler (404) gekoppelt ist und konfiguriert ist, den Ultraschallwandler mit einem Signal zu erregen, um die Linse (402) zu reinigen;
**dadurch gekennzeichnet, dass** das System einen Ausleger (408) enthält, der mit der Halterung (406) gekoppelt ist, und wobei der Ausleger (408) in die Linse (402) oder in die Halterung (406) integriert ist und wobei der Ausleger (408) aus demselben Material wie die Linse (402) besteht.

2. System nach Anspruch 1, wobei der Ausleger entlang einer Symmetrieachse von einer Kante der Linse nach außen vorsteht.

3. System nach einem der vorhergehenden Ansprüche, wobei der Ultraschallwandler ein zylindrischer Wandler mit einer Zylinderform ist.

4. System nach einem der Ansprüche 1 bis 2, wobei der Ultraschallwandler ein Ringwandler mit einer Ringform ist.

5. System nach Anspruch 4, wobei ein Außendurchmesser des Ringwandlers auf die Halterung ausgerichtet ist.

6. System nach Anspruch 4 oder 5, wobei ein Durchmesser der Linse größer als ein Durchmesser des Ringwandlers ist.

7. System nach Anspruch 4 oder 5, wobei ein Durchmesser der Linse kleiner als ein Durchmesser des Ringwandlers ist.

8. System nach einem der Ansprüche 4 bis 7, wobei ein Außendurchmesser der Halterung auf einen Durchmesser des Ultraschallwandlers ausgerichtet ist und ein Innendurchmesser der Halterung auf einen Durchmesser der Linse ausgerichtet ist.

9. System nach einem der Ansprüche 4 bis 7, wobei ein Außendurchmesser der Halterung auf einen Durchmesser der Linse ausgerichtet ist und ein Innendurchmesser der Halterung auf einen Durchmesser des Ultraschallwandlers ausgerichtet ist.

10. System nach einem der vorhergehenden Ansprüche, wobei die Linse eine gekrümmte Linse ist oder eine ebene Linse ist.

11. System nach einem der vorhergehenden Ansprüche, wobei die Linse eine ebene Linse ist.

12. System nach einem der vorhergehenden Ansprüche, wobei die Linse konfiguriert ist, für eine Kamera ein Blickfeld größer als 100 Grad bereitzustellen.

13. System nach Anspruch 12, wobei die Linse eine gekrümmte Linse ist.

14. System nach Anspruch 13, wobei ein Durchmesser der gekrümmten Linse kleiner als ein Durchmesser des Ultraschallwandlers ist.

## Revendications

1. Système (100), comprenant :
un transducteur ultrasonore (404) ;
un support (406) rattaché à ce transducteur ultrasonore (404) ;
une lentille (402) rattachée au support (406); et
un circuit de commande (108) connecté au transducteur ultrasonore (404) et configuré de façon à exciter le transducteur ultrasonore avec un signal pour nettoyer la lentille (402) ;
**caractérisé en ce que** ce système comprend une console (408) rattachée au support (406) et cette console (408) étant intégrée dans la lentille (402) ou dans le support (406) et cette console (408) étant faite du même matériau que la lentille (402).

2. Système selon la revendication 1, la console faisant saillie vers l'extérieur le long d'un axe de symétrie à partir d'un bord de la lentille.

3. Système selon l'une quelconque des revendications précédentes, dans lequel le transducteur ultrasonore est un transducteur cylindrique ayant une forme cylindrique.

4. Système selon l'une quelconque des revendications 1 à 2, dans lequel le transducteur ultrasonore est un transducteur annulaire ayant une forme annulaire.

5. Système selon la revendication 4, dans lequel un diamètre extérieur du transducteur annulaire est aligné avec le support.

6. Système selon la revendication 4 ou 5, dans lequel un diamètre de la lentille est plus grand qu'un diamètre du transducteur annulaire.

7. Système selon la revendication 4 ou 5, dans lequel un diamètre de la lentille est plus petit qu'un diamètre du transducteur annulaire.

8. Système selon l'une quelconque des revendications 4 à 7, dans lequel un diamètre extérieur du support est aligné avec un diamètre du transducteur ultrasonique et un diamètre intérieur du support est aligné avec un diamètre de la lentille.

9. Système selon l'une quelconque des revendications 4 à 7, dans lequel un diamètre extérieur du support est aligné avec un diamètre de la lentille et un diamètre intérieur du support est aligné avec un diamètre du transducteur ultrasonique.

10. Système selon l'une quelconque des revendications précédentes, dans lequel la lentille est une lentille incurvée ou une lentille plate.

11. Système selon l'une quelconque des revendications précédentes, dans lequel la lentille est une lentille plate.

12. Système selon l'une quelconque des revendications précédentes, dans lequel la lentille est configurée de façon à fournir un champ de vision de plus que 100 degrés pour une caméra.

13. Système selon la revendication 12, dans lequel la lentille est une lentille incurvée.

14. Système selon la revendication 13, dans lequel un diamètre de la lentille incurvée est plus petit qu'un diamètre du transducteur annulaire.
